# EUROPÄISCHE PATENTSCHRIFT

(11) **EP 1 328 425 B1**
(45) Veröffentlichungstag und Bekanntmachung des Hinweises auf die Patenterteilung: **15.06.2005**
(21) Anmeldenummer: 01978433.9
(22) Anmeldetag: 18.10.2001
(51) Int. Cl.: B60R 25/02

(54) **VERRIEGELUNGSVORRICHTUNG EINER WELLE**
SHAFT LOCKING DEVICE
DISPOSITIF DE VERROUILLAGE D'UN ARBRE

(30) Priorität: 20.10.2000 DE 10051970; 28.09.2001 DE 10148138
(43) Veröffentlichungstag der Anmeldung: 23.07.2003
(73) Patentinhaber: Continental Teves AG & Co. oHG, 60488 Frankfurt (DE)
(72) Erfinder: LINKENBACH, Steffen, 65760 Eschborn (DE); HOFFMANN, Oliver, 60486 Frankfurt (DE); REUSS, Jochen, 63452 Hanau (DE)
(86) Internationale Anmeldenummer: PCT/EP2001/012037
(87) Internationale Veröffentlichungsnummer: WO 2002/034582

(56) Entgegenhaltungen:
- DE-A- 2 730 685
- DE-A- 19 752 519
- DE-C- 973 723

## Beschreibung

Die Erfindung bezieht sich auf eine Verriegelungsvorrichtung einer Welle, insbesondere einer Lenkwelle eines Kraftfahrzeugs, mit den Merkmalen des Oberbegriffs von Anspruch 1, die aus der DE-A-197 52 519 bekannt sind.

Vorrichtungen zur Verhinderung einer unbefugten Benutzung von Kraftfahrzeugen sind allgemein bekannt. Die meisten Kraftfahrzeuge sind zu diesem Zweck mit einer mechanischen Verriegelungsvorrichtung für die Lenkung ausgerüstet, bei der die Lenkungsver- und -entriegelung mit Hilfe des Zündschlüssels ausgeführt wird. Mit dem Zündschlüssel ist ein an dessen Ende angeordneter Exzenter betätigbar, der einen federvorgespannten Schieber axial bewegt. Durch eine Ausformung am Schieber ist ein Verriegelungszahnkranz in eine Verzahnung der Lenkwelle bringbar, wodurch die Lenkung entweder frei drehbar oder verriegelt wird.

Der Erfindung liegt die Aufgabe zugrunde, eine Verriegelungsvorrichtung für eine Welle, insbesondere eine Lenkwelle eines Kraftfahrzeugs zu schaffen, die einfach aufgebaut ist aber eine sichere Betätigung ermöglicht.

Die Aufgabe wird durch die Merkmale des Anspruchs 1 gelöst. Die erfindungsgemäße Verriegelungseinrichtung bietet den Vorteil, dass mit wenigen mechanischen Bauteilen eine drehbare Welle, insbesondere eine Lenkwelle oder Lenkachse, gesichert werden kann.

Vorzugsweise sind die Verriegelungselemente kugelförmig.

Es ist erfindungsgemäß vorgesehen, dass sich die Verriegelungselemente über ein oder mehrere elastische Elemente an einem Gehäuse abstützen.

Die Verriegelungselemente greifen in einer unverriegelten Stellung in eine sich etwa radial zur Welle erstreckende Ausnehmung oder Öffnung, vorzugsweise eine radiale Ringnut, zumindest teilweise ein.

Nach der Erfindung greifen die Verriegelungselemente in einer verriegelten Stellung in eine sich im wesentlichen längs der Welle erstreckende Ausnehmung oder Öffnung zumindest teilweise ein.

Es ist vorgesehen, dass bei einer Verriegelung der Welle die Verriegelungselemente mittels eines elektronischen Antriebs oder Magneten, vorzugsweise eines Elektromagneten, von der unverriegelten Stellung in die verriegelte Stellung bewegbar sind. Durch eine Betätigung auf elektromechanischem Wege, vorzugsweise mit Hilfe von Elektromagneten, kann eine Integration in ein elektronisches Wegfahrsperren-System einfach realisiert werden. Bei diesem System ist dann ein herkömmlicher Zündschlüssel mit Schließzylinder nicht mehr notwendig.

Es sind mehrere Verriegelungselemente, vorzugsweise drei Verriegelungselemente, vorgesehen und in der verriegelten Stellung wird die Welle nicht durch sämtliche Verriegelungselemente, vorzugsweise nur durch ein Verriegelungselement, arretiert.

Vorzugsweise ist die Anzahl Ausnehmungen oder Öffnungen größer als die Anzahl der Verriegelungselemente, wobei insbesondere drei Verriegelungselemente und fünf Ausnehmungen oder Öffnungen vorgesehen sind. Um die Auflösung zu erhöhen können im Sinne der Erfindung die Anzahl der Ausnehmungen insbesondere aber auch vergrößert werden.

Es ist vorgesehen, dass die verriegelte Welle bei einem vorgegebenen, definierten Moment an der Welle zumindest eine teilweise Drehbewegung der Welle, vorzugsweise eine Drehbewegung um einen Winkel in einem Bereich von 0° bis 5°, vorzugsweise ca. 1°, gestattet.

Vorzugsweise ist das Moment an der Welle ein Wert in einem Bereich von 3 Nm bis 300 Nm, vorzugsweise ca. 6 Nm.

Nach der Erfindung ist es vorgesehen, dass die Verriegelungsvorrichtung zur Verriegelung einer elektromechanischen Lenkung eines Kraftfahrzeugs dient.

Vorzugsweise weist die Verriegelungsvorrichtung einen elektronischen Antrieb, vorzugsweise Elektromagneten auf, der elektronisch gesteuert und überwacht wird.

Nach der Erfindung ist die Verriegelungsvorrichtung in ein elektronisches Wegfahrsperrsystem eines Kraftfahrzeugs integriert.

Vorteilhafte Ausführungen der erfindungsgemäßen Verriegelungsvorrichtung werden beispielhaft anhand von 3 Abbildungen (Fig.1 bis Fig.3) erläutert.
Fig.1 zeigt eine Ausführung des erfindungsgemäßen Verriegelungsmechanismus in einem Schnitt längs einer Lenkachse in einer unverriegelten Stellung.
Fig.2 zeigt den in der Fig.1 dargestellten Verriegelungsmechanismus in einer verriegelten Stellung.
Fig. 3 zeigt den in der Fig.1 und 2 dargestellten Verriegelungsmechanismus in einem Querschnitt.

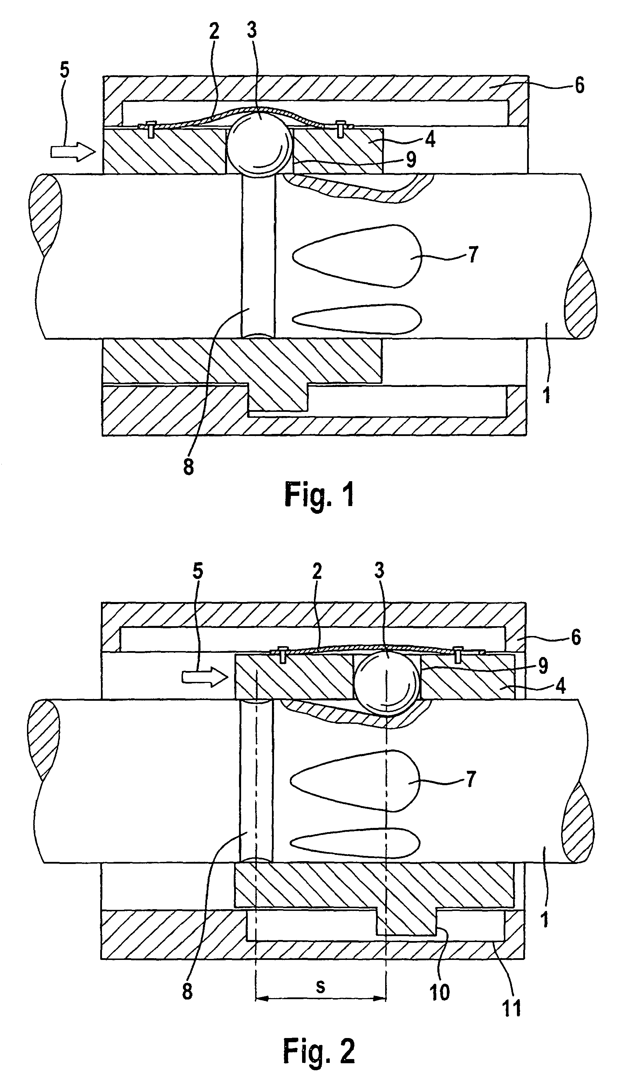

Bei der in der Fig. 1 dargestellten Ausführungsform weist der Verriegelungsmechanismus für eine drehbare Welle 1 elastische Elemente, insbesondere Federelemente 2, Kugeln 3, einen Kugelkäfig 4, einen Antrieb, hier durch einen Pfeil 5 dargestellt, und ein Gehäuse 6 auf.

Der Antrieb, insbesondere ein Magnetantrieb, ist wirkverbunden mit dem Kugelkäfig 4 und den Kugeln 3, wobei die Hubkraft des Magnetantriebs nach Maßgabe des maximalen Moments der Verriegelung gewählt wird. Die drehbare Welle 1 kann z.B. eine Lenkwelle oder Lenkachse sein, welche mit Kugelbahnen 7 und einer umlaufenden Nut 8 versehen ist. Die Kugelbahnen 7 sind rampenförmig ausgebildet und am Umfang der Welle 1 verteilt. Es kann aber eine die Welle umgreifende Hülse formschlüssig und/oder kraftschlüssig auf der Welle 1 angeordnet werden.

Die Hülse weist dann erfindungsgemäß auch eine Nut und Kugelbahnen bzw. Rampen auf (hier nicht dargestellt). Umgeben wird die Welle 1 bzw. Hülse von dem Kugelkäfig 4, der die Welle 1 bzw. Hülse hülsenförmig umfasst. In dem Kugelkäfig 4 sind mindestens eine, oder vorzugsweise mindestens drei, radial angeordnete Öffnungen oder Bohrungen 9 angeordnet, in welchen sich eine, oder mehrere, vorzugsweise drei Kugeln 3 befinden. Der Kugelkäfig 4 kann Teil eines Magnetankers sein oder von einem Magnetantrieb 5 bewegt werden. Dieser Magnet soll vorzugsweise bistabil sein. Dadurch wird vorteilhaft Energie nur zum Schalten benötigt. In den beiden Endlagen muss kein Strom fließen. Der Kugelkäfig 4 befindet sich axial verschiebbar aber radial verdrehgesichert im Gehäuse. Abstützend am Kugelkäfig 4 sind die ein oder mehrere Federelemente 2 angeordnet, welche die Kugeln 3 in Richtung der Welle 1 drücken.

In der Fig.1 ist die gelöste Stellung dargestellt. Alle Kugeln 3 befinden sich in der Nut 8 und die Welle 1 kann sich drehen. Soll die Verriegelung aktiviert werden, wird der Magnetantrieb eingeschaltet und der Kugelkäfig 4 bewegt die Kugeln 3 in Richtung der Rampen 7 bis der Kugelkäfig 4 bzw. die Kugeln 3 nach einem definierten Weg stehen bleiben. Die Kugeln 3 werden dabei vorzugsweise entgegen der Fahrtrichtung des Fahrzeugs bewegt, wodurch vorteilhaft beim starken Bremsen ein ungewolltes Verriegeln vermieden wird.

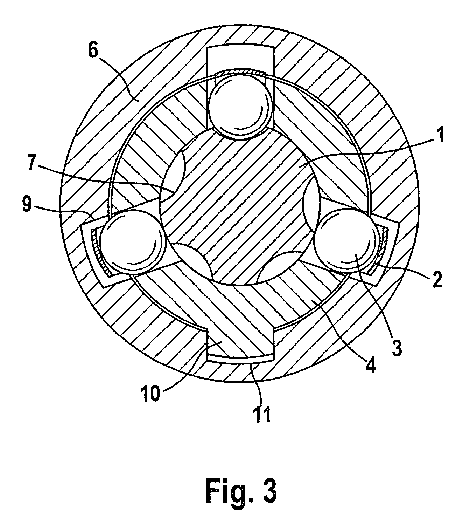

Die aktivierte Verriegelung ist in der Fig.2 und 3 gezeigt, wobei dieselben Elemente auch mit denselben Bezugszeichen versehen sind. Der Kugelkäfig 4 bzw. die Kugeln 3 bleiben hier in der verriegelten Endstellung nach einem definierten Weg s stehen. Das Verhältnis von Kugeln 3 zu Kugelbahnen 7 ist so, dass es nur eine Position gibt, in der eine Kugel vollständig in die Kugelbahn rollen kann. Dies ist in der Querschnittsdarstellung der Fig.3 erkennbar. Als Verdrehsicherung weist der Kugelkäfig 4 hier einen Vorsprung 10 oder einen nasenförmig Bereich auf, welcher in einer längs der Welle 1 angeordneten Nut 11 in dem Gehäuse 6 eingreift.

Bei einer Verriegelung für eine Fahrzeuglenkung ist die konstruktive Auslegung der Welle 1 bzw. Hülse, des Kugelkäfigs 4 und der Federelemente 2 so gewählt, dass das Moment, welches über das Lenkrad eingebracht wird, vom Verriegelungsmechanismus aufgenommen werden kann. Überschreitet das Lenkraddrehmoment einen bestimmten Wert, vorzugsweise in einem Bereich von 3 Nm bis 300 Nm, insbesondere ca. 6 Nm, wird die Kugel 3 aus der Bahn 7 herausgedrückt und die Welle 1 und somit das Lenkrad kann bewegt werden. Eine Lenkraddrehung ist so lange möglich, bis die nächste Kugel 3 einrastet. Ist das Lenkraddrehmoment dann immer noch über der Schwelle kann das Lenkrad weiter gedreht werden. Im anderen Fall bleibt das Lenkrad in dieser Position stehen. Im Betrieb kann es durchaus vorkommen, dass eine Verriegelung der Lenkung ausgelöst wird, aber die Kugeln 3 und Kugelbahnen 7 an der Lenkwelle 1 nicht passend zueinander stehen und damit nicht ineinander greifen können. Es muss jedoch auch in einer solchen Stellung eine Verriegelung der Lenkung sicher durchgeführt werden können. Tritt nun der Sonderfall der nicht ineinandergreifenden Kugeln 3 und Kugelbahnen 7 ein, stehen die Kugeln 3 federvorgespannt durch die Feder 2 an der Lenkwelle 1 an. Beim nächsten Drehen des Lenkrades in beliebiger Drehrichtung spurt eine Kugel 3 in die nächste Kugelbahn 7 der Lenkwelle 30 ein.

Zum Lösen der Verriegelung wird der Kugelkäfig 4 durch den Magneten oder ein Federelement in die in der Fig.1 gezeigten Ausgangsposition bewegt. Dabei befinden sich die Kugeln 3 wieder in der Ringnut 8 und halten, gedrückt von den Federelementen 2, den Kugelkäfig 4 in dieser Position.

Durch die Verriegelung nach der Erfindung wird ein Verdrehen der Welle 1 bis zu einem bestimmten Drehmoment sicher verhindert und ab diesem Drehmoment ein Verdrehen zugelassen. Dabei wird mit technisch einfachen Mitteln ein definiertes Überdrehen bei einem bestimmten Lenkradmoment ermöglicht. Durch die erfindungsgemäße Anordnung der Kugeln 3 zueinander, so dass sich nur eine Kugel 3 in einer Kugelbahn 7 befinden kann, ergibt sich als ein weiterer Vorteil, dass durch die Anzahl der Kugeln 3 bzw. der Kugelbahnen 7 die Auflösung der Verriegelung variiert werden kann. Weiterhin kann durch die konstruktive Auslegung der Kugelhülsen- und Kugelkäfiggeometrien in Verbindung mit der Auslegung des Federelements 2 das Lösemoment genau definiert werden.

Nach der Erfindung kann dieser Verriegelungsmechanismus parallel zueinander (mit Versatz) mehrfach angeordnet werden. Das bedeutet, es werden mehrere die Welle 1 umgreifende Hülsen und Kugelkäfige 4 auf der Lenkachse 1 parallel angeordnet, wodurch eine sehr feine Rasterung erreicht werden kann und die Feinheit der Verriegelung erhöht wird.

## Patentansprüche

1. Verriegelungsvorrichtung einer Welle (1), insbesondere eine Lenkwelle eines Kraftfahrzeuges, mittels der die Welle gegenüber einem Gehäuse (6) arretierbar und somit eine Drehung eines Lenkrades und damit das Einschlagen der lenkbaren Fahrzeugräder verhinderbar ist,
- wobei die Verriegelungsvorrichtung zumindest ein Veniegelungselement (3) aufweist,
-- das in eine Ausnehmung oder Öffnung der Welle zumindest teilweise zum Eingreifen bringbar ist und
-- durch einen Verriegelungsmechanismus (4,5) in Längsrichtung der Welle axial verschieblich ist,
**dadurch gekennzeichnet, daß**
- das zumindest eine Verriegelungselement (3) über ein elastisches Element an dem Gehäuse (6) abgestützt ist und
-- in einer unverriegelten Stellung in eine am Außenumfang der Welle und radial zu dieser sich erstreckende Ausnehmung oder Öffnung, vorzugsweise eine radiale Ringnut (8), zumindest teilweise eingreift, und
-- in einer vemegelten Stellung in eine sich im wesentlichen längs der Welle erstreckende Ausnehmung oder Öffnung (7) zumindest teilweise eingreift.

2. Verriegelungsvorrichtung nach Anspruch 1,
**dadurch gekennzeichnet, dass** die Verriegelungselemente kugelförmig sind.

3. Verriegelungsvorrichtung nach einem der Ansprüche 1 bis 2,
**dadurch gekennzeichnet, dass** bei einer Verriegelung der Welle die Verriegelungselemente mittels eines elektronischen Antriebs oder Magneten, vorzugsweise eines Elektromagneten, bewegbar sind.

4. Verriegelungsvorrichtung nach einem der Ansprüche 1 bis 3,
**dadurch gekennzeichnet, dass** mehrere Verriegelungselemente, vorzugsweise drei Verriegelungselemente, vorgesehen sind und dass in der verriegelten Stellung nicht sämtliche Verriegelungselement, vorzugsweise nur ein Verriegelungselement, die Welle arretiert.

5. Verriegelungsvorrichtung nach einem der Ansprüche 1 bis 4,
**dadurch gekennzeichnet, dass** die Anzahl Ausnehmungen oder Öffnungen größer ist als die Anzahl der Verriegelungselemente, wobei insbesondere drei Verriegelungselemente und fünf Ausnehmungen oder Öffnungen vorgesehen sind.

6. Verriegelungsvorrichtung nach einem der Ansprüche 1 bis 5,
**dadurch gekennzeichnet, dass** die verriegelte Welle bei einem vorgegebenen, definierten Moment an der Welle zumindest eine teilweise Drehbewegung der Welle, vorzugsweise eine Drehbewegung um einen Winkel in einem Bereich von 0° bis 5°, vorzugsweise ca. 1°, gestattet.

7. Verriegelungsvorrichtung nach Anspruch 6,
**dadurch gekennzeichnet, dass** die verriegelte Welle zumindest eine teilweise Drehbewegung der Welle bei einem vorgegebenen, definierten Moment an der Welle gestattet, das in einem Bereich von 3 Nm bis 300 Nm, vorzugsweise ca. 6 Nm, liegt.

8. Verriegelungsvorrichtung nach einem der Ansprüche 1 bis 7,
**dadurch gekennzeichnet, dass** die Verriegelungsvorrichtung zur verriegelung einer elektromechanischen Lenkung eines Kraftfahrzeugs vorgesehen ist.

9. Verriegelungsvorrichtung nach einem der Ansprüche 1 bis 8,
**dadurch gekennzeichnet, dass** die Verriegelungsvorrichtung einen elektronischen Antrieb, vorzugsweise Elektromagneten aufweist, der elektronisch gesteuert und überwacht wird.

10. Verriegelungsvorrichtung nach einem der Ansprüche 1 bis 9,
**dadurch gekennzeichnet, dass** die Verriegelungsvorrichtung in ein elektronisches Wegfahrsperrsystem eines Kraftfahrzeugs integriert ist.

## Claims

1. Locking device for a shaft (1), especially a steering shaft of a motor vehicle, by means of which the shaft can be locked in relation to a housing (6) and, thus, turning of the steering wheel and hence the steerable vehicle wheels can be prevented,
wherein the locking device includes at least one locking element (3),
which, at least partly, can be brought into engagement with a recess or opening of the shaft and
can be displaced axially in the longitudinal direction of the shaft by means of a locking mechanism (4, 5),
**characterized in that**
the at least one locking element (3) is supported on the housing (6) by means of an elastic element, and
in an unlocked position, engages at least partly into a recess or opening, preferably a radial ring groove (8), extending at the outside periphery of the shaft and in a radial direction to the shaft, and
in a locked position, engages at least partially into a recess or opening (7) extending essentially along the shaft.

2. Locking device according to claim 1,
**characterized in that** the locking elements have the shape of a ball.

3. Locking device according to any one of claims 1 to 2,
**characterized in that** the locking elements are movable by means of an electronic drive or magnet, preferably an electromagnet, when the shaft is locked.

4. Locking device according to any one of claims 1 to 3,
**characterized in that** several locking elements, preferably three locking elements, are provided and **in that** in the locked position, not all the locking elements, but preferably only one locking element locks the shaft.

5. Locking device according to any one of claims 1 to 4,
**characterized in that** the number of recesses or openings exceeds the number of locking elements, with especially three locking elements and five recesses or openings being provided.

6. Locking device according to any one of claims 1 to 5,
**characterized in that** the locked shaft in case of a preset, defined moment at the shaft allows at least a partial rotational movement of the shaft, preferably a rotation around an angle in the range of 0° to 5°, preferably approximately 1°.

7. Locking device according to claim 6,
**characterized in that** the locked shaft allows at least a partial rotational movement of the shaft in case of a preset, defined moment at the shaft, in the range of 3 Nm to 300 Nm, preferably approximately 6 Nm.

8. Locking device according to any one of claims 1 to 7,
**characterized in that** the locking device is intended for locking an electromechanical steering system of a motor vehicle.

9. Locking device according to any one of claims 1 to 8,
**characterized in that** the locking device is provided with an electronic drive, preferably an electromagnet, being electronically controlled and monitored.

10. Locking device according to any one of claims 1 to 9,
**characterized in that** the locking device is integrated into an electronic immobilising system of a motor vehicle.

## Revendications

1. Dispositif de verrouillage d'un arbre (1), en particulier d'un arbre de direction d'un véhicule automobile, au moyen duquel l'arbre peut être bloqué par rapport à un boîtier (6) et empêcher ainsi une rotation d'un volant et donc le braquage des roues directrices du véhicule,
- le dispositif de verrouillage comportant au moins un élément de verrouillage (3),
-- qui peut être amené au moins en partie en engagement dans un évidement ou ouverture de l'arbre, et
-- peut coulisser axialement dans la direction longitudinale de l'arbre par un mécanisme de verrouillage (4, 5),
**caractérisé en ce que**
- le au moins un élément de verrouillage (3) est soutenu sur le boîtier (6) par l'intermédiaire d'un élément élastique, et
-- dans une position non verrouillée, il s'engage au moins en partie dans un évidement ou ouverture, de préférence une rainure annulaire radiale (8), s'étendant sur le pourtour extérieur de l'arbre et radialement par rapport à celui-ci, et
-- dans une position verrouillée, il s'engage au moins en partie dans un évidement ou ouverture (7) s'étendant sensiblement le long de l'arbre.

2. Dispositif de verrouillage selon la revendication 1, **caractérisé en ce que** les éléments de verrouillage sont de forme sphérique.

3. Dispositif de verrouillage selon l'une des revendications 1 ou 2, **caractérisé en ce qu'**en cas de verrouillage de l'arbre, les éléments de verrouillage sont déplaçables au moyen d'un entraînement électronique ou d'aimants, de préférence au moyen d'un électro-aimant.

4. Dispositif de verrouillage selon l'une des revendications 1 à 3, **caractérisé en ce que** sont prévus plusieurs éléments de verrouillage, de préférence trois éléments de verrouillage, et **en ce que** dans la position verrouillée tous les éléments de verrouillage ne bloquent pas l'arbre, mais de préférence un seul élément de verrouillage.

5. Dispositif de verrouillage selon l'une des revendications 1 à 4, **caractérisé en ce que** le nombre d'évidements ou d'ouvertures est supérieur au nombre d'éléments de verrouillage, en particulier trois éléments de verrouillage et cinq évidements ou ouvertures étant prévus.

6. Dispositif de verrouillage selon l'une des revendications 1 à 5, **caractérisé en ce que** pour un moment défini, prédéterminé, sur l'arbre, l'arbre verrouillé autorise au moins un mouvement de rotation partiel de l'arbre, de préférence un mouvement de rotation d'un angle compris dans une plage de 0° à 5°, de préférence d'environ 1°.

7. Dispositif de verrouillage selon la revendication 6, **caractérisé en ce que** l'arbre verrouillé autorise au moins un mouvement de rotation partiel de l'arbre pour un moment défini, prédéterminé, sur l'arbre, qui se situe dans une plage de 3 Nm à 300 Nm, de préférence environ 6 Nm.

8. Dispositif de verrouillage selon l'une des revendications 1 à 7, **caractérisé en ce que** le dispositif de verrouillage est prévu pour verrouiller une direction électromécanique d'un véhicule automobile.

9. Dispositif de verrouillage selon l'une des revendications 1 à 8, **caractérisé en ce que** le dispositif de verrouillage comporte un entraînement électronique, de préférence des électro-aimants, lequel est commandé et contrôlé de manière électronique.

10. Dispositif de verrouillage selon l'une des revendications 1 à 9, **caractérisé en ce que** le dispositif de verrouillage est intégré à un système électronique d'interdiction de démarrage d'un véhicule automobile.
